# EUROPEAN PATENT APPLICATION

(11) **EP 3 695 964 A1**
(43) Date of publication of application: **19.08.2020**
(21) Application number: 20157097.5
(22) Date of filing: 13.02.2020
(51) Int. Cl.: B32B 27/08, B32B 27/20, B32B 27/30, B32B 27/32, B32B 27/36, C08K 5/00

(54) **RECYCLABLE BLACK PLASTIC FOOD TRAY**

(30) Priority: 13.02.2019 GB 201902001
(71) Applicant: Quinn Packaging Limited, Co. Cavan (IE)
(72) Inventor: BOYLE, Kevin, Co. Cavan (IE); McCAFFREY, Thomas, Co. Cavan (IE); ROHRER, Patrik, Athlone, Co Westmeath (IE)
(74) Representative: Hanna Moore + Curley

(57) **Abstract**

A near infrared, NIR, detectable black plastic food tray for the packaging of foodstuffs is described.

## Description

### Field

The present application relates to plastic packaging and more particularly to plastic packaging that is provided in the form of trays and used for foodstuffs such as meat products.

### Background

It is well known in the food industry to provide sealed containers within which a foodstuff is retained prior to purchase by an end consumer. These containers typically comprise a tray within which the foodstuff is placed and a sealing film which is then subsequently applied to a top surface of the tray to form the sealed container. The sealing film may be secured in a variety of different ways to the tray, through the use for example of an adhesive or for example through a heat-sealing process.

It is known to manufacture the tray and the sealing film from a variety of plastics. For example, Polyethylene Terephthalate (PET) is commonly used and within the art it is known to use amorphous PET (APET) containers where there is desire for visibility of the product within the tray. It is also known to use crystalline PET (CPET) where there is a desire for the product to be used in a heat and eat application. Polypropylene (PP) is another common material for this use in manufacture of trays and as will be understood by those of ordinary skill it is also known to form sealing films from polyethylene, (PE). It is also known to form sealing films from PET with either co-extruded or laminated PE. Further examples of sealing films include those formed in a multi-layer structure comprising for example polyethylene/ Ethylene vinyl alcohol/ polyamide (PE/EVOH/PA). In such multilayer films, it is the stronger higher melting point polymers PET and PA that give the film it's structural integrity and the PE that provides the sealing functionality.

Known plastics trays come in a variety of shapes and sizes. Where used for a food product such as minced meat, the base and side walls of the tray will typically define a single receiving volume within the meat is placed and then a sealing film is used to seal the environment around the meat.

For other meat products such as burgers which are provided in a defined shape and where there is a desire for that shape to be retained until use, it is known to provide a contoured interior volume of the tray with individual regions of the receiving volume being dimensioned to receive individual burgers.

Irrespective of the type of food product being packaged there is, particularly in recent times, concerns about the amount of plastic in circulation. There is a desire for increased levels of recyclability within the industry and with the large volumes of plastic in circulation, there are developed technologies that try and separate plastic packaging into products of like material. One known technology involves the use of Near Infrared, NIR, which is an optical sorting technology that enables plastic packaging and other plastic wastes to be separated by polymer type. NIR technology allows the production of high-quality materials which can substitute virgin polymers in the manufacture of new items. It will be appreciated that different polymer types have different NIR fingerprints at a defined wavelength and this property can be used by the detector to identify a presence of specific polymers. Typically, where the fingerprint does not fit within 95 % of NIR detector's tolerance, the material is not recognised and will not be sorted out of the general waste.

Whilst NIR techniques can readily identify and allow the separation of multiple plastic types and colours there are challenges in separation of black plastics. The majority of black plastic packaging is coloured using carbon black pigments which do not enable the pack to be sorted by the NIR optical sorting systems being used widely in plastics recycling. As a result, black plastic packaging commonly ends up as residue waste and is disposed of in landfill or energy recovery through incineration.

As a result of these challenges in detecting conventional black food packaging, many waste organisations are recommending use of non-black plastics, where possible, such that the packaging can be more readily identified. However, these can actually have an adverse effect on the overall volume of recycled material, as it is easier to incorporate non-virgin plastic material into black packaging without compromising the final colour characteristics of the package itself. There therefore continues to be a need to provide a black plastic packaging that can be used for the packaging of foodstuffs and yet can be identified within a recycling sorting plant.

### Summary

In addition to the conventional and known problems associated with identifying a NIR detectable alternative to carbon-black, the present inventors have also realised that there is a specific further requirement in the packaging of meat products. Packaged meat products typically undergo a metal detection process step prior to entry into the retail supply chain. This ensures that there are no metal fragments or pieces within the meat product on delivery to the end customer. It is important therefore that any packaged meat product can pass through a metal detector with confidence that any positive indication of metal present is wholly attributable to the actual presences of metal in the meat product. The present inventors have realised that there is therefore a need for a black plastic food packaging that is both NIR detectable and that also can successfully pass through a metal detection process step without initiating false positive indications of metal components within the meat foodstuff.

These and other problems are addressed by the present invention by a black plastic non-magnetic/ non-metal food tray that is NIR detectable, the tray being formed from at least one thermoformed sheet fabricated from at least one polymer mixed with a black colourant comprising at least one non-magnetic organic pigment. The non-magnetic property is desirably provided by ensuring that there are no or, magnetically negligible amounts of, metal constituents within the pigment. By using a non-metal based organic pigment, herein after also referred to as a non-metallic organic pigment, the present inventors have identified how to provide a colourant that can be used in an extrusion process to fabricate a food packaging material that will not trigger any metal detection equipment that is provided within the food packaging plant.

It will be understood that the characteristic of organic colorants is the presence of chromophores, a system of conjugated double bonds (π-electron system). The appearance of colour is associated with electronic excitation caused by an absorption of selected wavelengths of the incident visible light, thereby giving the molecule the shade of the resulting complementary colour. Within the general nomenclature of organic pigments there are two main classifications; azo pigments and polycyclic pigments. The present inventors have realised that within the general grouping that specific organic pigments can be judiciously used to provide a black colourant that when combined with a base polymer forms a plastics tray that is both non-magnetic and also NIR detectable. At the same time, the black colourant that is added to the base polymer to provide the colouring of the final tray does not mask the NIR signature of the base polymer such that when the finished tray is passed through an NIR sorting facility, the tray is identifiable through one or more of a characteristic NIR absorption or reflectance signature for that tray type.

In this way, in addition to the conventional and known problems associated with identifying a NIR detectable alternative to carbon-black, the present inventors have also realised that this specific use of organic pigment which do not include iron or other metal constituents that a specific further requirement in the food industry, that of being able to ensure that meat that is packaged within a plastic packaging can be tested for the presence of metal based material and that the actual packaging itself will not give a false positive indication of the presence of metal- arising from the materials used in the packaging itself.

Accordingly, a first embodiment of the application provides a tray as defined in claim 1. Advantageous embodiments are provided in the dependent claims.

### Brief Description Of The Drawings

The present application will now be described with reference to the accompanying drawings in which:
Figure 1 is a schematic showing a process for incorporating a masterbatch into a plastic sheet in accordance with the present teaching.
Figure 2 is a schematic showing a process for thermoforming plastic trays using a plastic sheet that incorporates a masterbatch formulated in accordance with the present teaching.
Figure 3 is an example of an NIR analysis of a tray fabricated in accordance with the present teaching.
Figure 4 is a graph of a known NIR absorbance spectrum for PET.
Figure 5 is a graph of a known NIR reflectance spectrum for PET.

### Detailed Description Of The Drawings

The present teaching will now be discussed with reference to specific examples which are useful for an understanding of the present teaching. In accordance with the present teaching a black colourant masterbatch is incorporated with a polymer material, in the exemplary arrangements a PET, to manufacture firstly a plastic sheet. This plastic sheet can then be thermoformed into trays for the packaging of a foodstuff. As will be appreciated by those of ordinary skill, the processing of plastic material to form a finished package involves a number of processing steps typically incorporating one or more of sheet extrusion and thermoforming technologies.

In order to address the problems of forming a black plastic tray that is both near infrared (NIR) detectable whilst also not having any metal constituents or components such that would trigger a metal detector in a meat processing plant, the present inventors have identified a series of organic pigments that have no metal constituents. These pigments can be mixed together into a colourant masterbatch which is then combined with the base plastic material such as PET/PE to form a plastic sheet. It will be appreciated that use of PET/PE as constituents of the plastic tray that is used in the formation of the tray is not considered limiting and that trays formed only from PET, either in monolayers or ABA type constructions could equally be used. Indeed, within the context of the present teaching the tray can be formed from at least one polymer selected from one or more of the following;

| | |
|---|---|
| a. | Amorphous Polyethylene, APET; |
| b. | Crystalline Polyethylene, CPET; |
| C. | Polypropylene, PP; |
| d. | Polyethylene, PE; |
| e. | Polystyrene, PS; |
| f. | Polyvinyl Chloride, PVC; |
| g. | Ethylene Vinyl Alcohol, EVOH. |

Irrespective of the materials used to form the sheet, once formed this sheet can then be processed through conventional thermoforming process steps to form black plastic trays.

The selected organic pigments are also compliant with EU regulation 10/2011 on plastic materials and articles intended to come into contact with food.

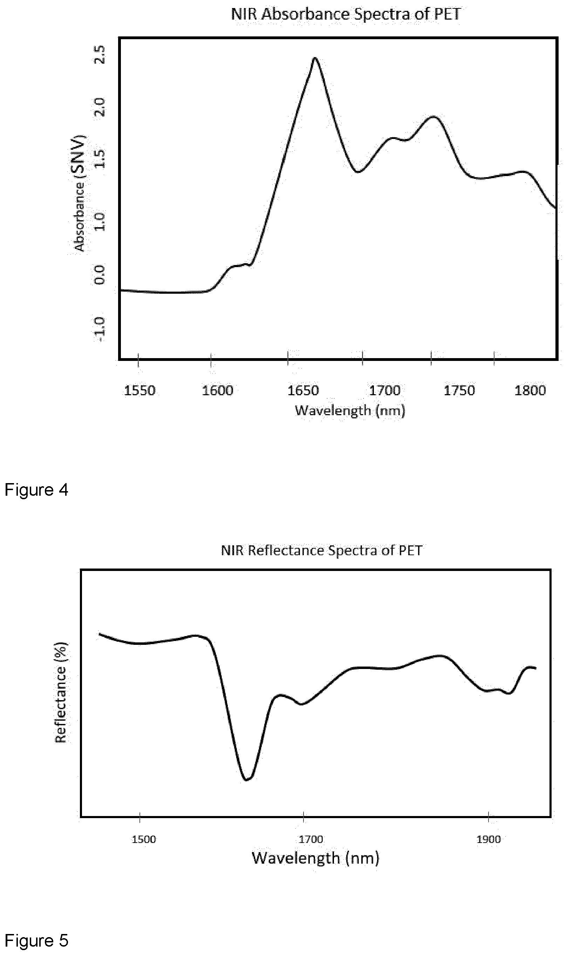

Known organic pigments are not black in themselves and the present inventors have identified a set of constituent materials that when judiciously combined create a strong black colour. At the same time, the formed masterbatch does not interfere with, or mask the polymers NIR reflection and/or absorption characteristics, examples of which are provided in Figures 4 and 5. In this way the final formed tray has sufficient near infrared reflection characteristics to be recognised in sorting recycling plants. By avoiding the use of any constituent material that has metal or metal traces, the formed final product will exhibit no traces of magnetism (metal detectability).

In a first example of a masterbatch formulation fabricated in accordance with the present teaching, three separate organic compounds were combined to create the final black colourant. It will be appreciated that the specifics of these three organic compounds can be varied without departing from the present teaching.

The person of skill will appreciate that a masterbatch formulation typically consists of pigment compounds representing colour, a carrier representing the matrix where other ingredients are dispersed, a wax that functions to help with lubrication and dispersion of ingredients ensuring a uniform homogeneity of all ingredients is achieved across the whole finished article and other additives such as fillers, desiccant additives, stabilisers, etc. The matched colour is verified in a control polymer, preferably used in the final process.

For the present purposes we discuss the generation of a masterbatch that is intended to be used in colouring an exemplary PET/PE base polymer. The present inventors have identified a particular set of chemical compounds that are used in combination to colour match currently supplied carbon black formulation used in the production of thermoformed food trays at a 2.0 % addition rate in the PET/PE base polymer.

Before the colour matching process, the base polymer PET/PE is dried at approximately 80 - 90 °C. The drying is finished in drier that is capable of drying hygroscopic plastic granules, such as that provided under the Trade Mark Motan MDE 40. Once the material is dried, it is stored in desiccant jars and used while colour matching. The finished colour is verified by an injection moulding process using for example machines fabricated by Arburg- for example the Arburg Allrounder 221K 75-250, and/or that by Dr Boy- for example the Boy 35E. Both injection moulding machines are examples of machines that have chillers with mould thermo control functionality. It will be appreciated that colour matching in PET/PE material is very sensitive to the cooling process and the colour achieved at one mould temperature does not necessarily match the colour achieved at a different mould temperature. For this specific product, a mould temperature of between 20 - 30 °C is advantageously used in order to achieve an amorphous structure that will mimic the one in the final production line. Other quality checks can be done by, for example, compression moulding, where thin film is obtained by pressing injection moulded plaques at 10 bars and cooling the pressed film in cold water at approximately 5 - 15 °C.

As detailed above, the present inventors have realised that a combination of two or more organic pigments can judiciously provide a black masterbatch that is both NIR detectable and also non-magnetic. In accordance with a preferred arrangement a masterbatch comprises a combination of:
1. Phthalocyanine green used at 20 - 40 %,
2. Diketopyrrolo-Pyrrolo red used at 10 - 30 % and
3. Azo salt yellow used at 1 - 10 %.

It will be appreciated that Phthalocyanine green G, which has many commercial names, is a synthetic green pigment from the group of phthalocyanine dyes, a complex of copper (II) with chlorinated phthalocyanine and has a chemical formula C₂₄Cl₁₆CuN₈. The present inventors have realised that this pigment when combined with other pigments provides a dominant contribution to the final desired black colouring effect required.

Diketopyrrolopyrroles (DPPs) are organic dyes and pigments based on the heterocyclic dilactam 2,5-dihydropyrrolo[3,4-c]pyrrole-1,4-dione. The Azo salt is an example of a diarylide pigment and in the context of the present teaching combines with the DPPS combine with the Azo yellow salt to supplement the dominant black contribution of the Phthalocyanine green.

The masterbatch formulation will typically include other ingredients to increase dispersion and therefore achieve stronger black shade colouring. Such ingredients may provide a lubricant, an example material being an ethylene homopolymer wax such as low density polyethylene wax selected from one of, Ethylene vinyl acetate, montan, paraffin or a stearate-based wax.

The organic pigments can be treated with desiccant additive (such as CaO) while they are mixed and extruded. All ingredients, including filler, are desirably mixed into a carrier material such as a low density polyethylene. The present inventors have realised that a powdered carrier system is useful in that it increases dispersion and colour strength. Further examples of suitable carrier material include one or more of: Polyethylene (PE), Polypropylene (PP), polyethylene terephthalate (PET), Polyethylene Terephthalate Glycol (PETG), Ethylene-vinyl acetate (EVA), Ethylene Methyl Acrylate (EMA), Acrylonitrile Butadiene Styrene (ABS), Polystyrene (PS), and Poly(methyl methacrylate) (PMMA). The filler material typically forms between 1 and 40 weight percent of the colourant and is selected from one of: calcium carbonate (CaCO₃), hydrated magnesium silicate, barium sulphate, wollastonite, mica or silica-based fillers

The initial mixture of constituent ingredients is desirably mixed at high speed, using for example a Mixaco™ mixer, together with additional constituents selected from lubricants, fillers, desiccant additives and carriers.

If, for example, the constituent materials are provided in the % combination of upto 40% phthalocyanine green, upto 30% Diketopyrrolo-Pyrrolo and upto 10% azo salt yellow, then the rest of the mixture will typically comprise a carrier 20 - 60 %, wax 1 - 5 %, filler 1 - 20 % and desiccant additive 1 - 5 %.

In contrast with an example of 20 % of green, 30 % of red, 5 % of yellow, then the additional constituents will typically be provided at % of about 3 % of filler, 2 % of desiccant, 3 % of wax and 37 % of carrier.

After mixing, the material is extruded on for example a twin-screw extruder such as that fabricated by Leistritz to enhance the dispersion level of organic compounds in the carrier. The extrusion process involves the generation of individual strands that are then cooled in a water bath having a temperature of about 20 - 30 °C which is significantly less than the typical extruder temperatures of about 130 - 170 °C.

The cooled strands are then pelletised and standard size of granules is sorted from potential longs and small/large granules. The coloured batch then passes through a quality control process and, if passed, is then packaged.

The above example is exemplary of the type of organic compounds that can be used in fabricating a masterbatch in accordance with the present teaching. In modifications to that described above ingredient 1, ingredient 2 and ingredient 3 can be also substituted by other organic compounds such:
∘ Monoazo pigments
∘ Disazo pigments
∘ Pigment lakes
∘ Phthalocyanine pigments
∘ Quinacridone pigments
∘ Perylene pigments
∘ Thioindigo pigments
∘ Dioxazine pigments
∘ Triarylcarbonium pigments
∘ Diketopyrrolo-Pyrrolo pigments

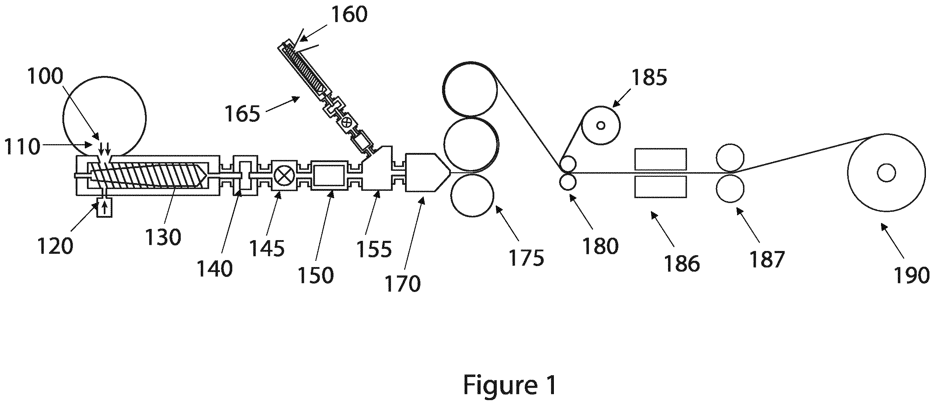

Having formulated a masterbatch formulation it is then transferred to a production area. An example of the type of machinery that may be used in producing an extruded sheet of plastic material incorporating the masterbatch above is shown in Figure 1.

In this example, recycled PET/PE material 100 commonly known as PET/PE regrind is fed into a recycling system 110, such as the Vacurema Basic by EREMA. The reactor is maintained at a temperature ranging from 110°C to 130°C and at a vacuum of less than 10 mbar. This ensures the material is dry and fully prepared for the melting stage of the extrusion process. It will be appreciated that either Recycled PET, rPET, or Virgin PET can both be used as a substitute for PET/PE re-grind, but the process will need to be adjusted. This is particularly important for rPET that is not Food Grade.

From the vacuum reactor 110 the PET/PE material 100 is fed into an extruder barrel 130 and conveyed along by the extruder screw melting it and homogeneously mixing it with Colourant Masterbatch 120 that is fed into the barrel 130 from the opposite side by means of a calibrated dosing screw. The colourant can be extruded with the at least one polymer in the ratio of between 0.1 and 5 weight percent and is typically included at a level between 0.1% and 5.0% but preferably between 1% and 3%, most preferably at about 2%.

The temperature profile of the extruder ranges from 130°C at the in-feed to 275°C at the transition and meeting zones. This produces a high-quality, stable melt that is then passed through a fine particulate filter 140, a melt pump 145 (to regulate fluid volume, velocity and pressure), a static mixer 150 to further mix and disperse the pigments carried by the colourant masterbatch, ultimately entering a fed-block 155 (via a selector plug) where the molten material is now sandwiched between two layers of PET (virgin or food grade reprocessed recyclate 160), which are introduced from a separate extrusion systems 165.

The two skin layers in this example of the invention do not have the colourant included and are thus pure PET. It is possible if desired to incorporate the colour in these layers if additional colour strength and depth is required but this will add further cost and potential complexity. In this example, the final sheet material will have an ABA construction, with the skin layers sandwiching the coloured PET/PE layer that incorporates the masterbatch colourant. It will be appreciated that it is also possible to modify the process to avoid the two outer layers of virgin PET material when using food grade or food approved processes. It is also possible to provide a two-layer structure where the coloured PET/PE layer that incorporates the masterbatch colourant forms one layer of an AB construction. Monolayer constructions are also possible.

This molten planer sandwich of polymer materials is extruded along the final flow channels into a sheet die 170 where it is drawn from a circular or slightly oblong profile into a mainly rectangular profile. On exiting the die the molten material (or extrudate) passes into a set of highly polished chrome rollers known as a calender roll stack 175. Here the extrudate is squeezed into a very uniform and accurate profile and is cooled to set the shape and dimensions of the sheet. In the example, herein described, the three calender rolls are typically chilled to temperatures ranging from 10°C to 50°C and preferably the first is chilled to 20°C, the second to 25°C and the third to 35°C. This ensures the PET material is quickly cooled and is thus mainly amorphous in composition- to ultimately form an APET sheet. It will be appreciated that this is important when the sheet is later softened and stretched in the thermoforming process.

In accordance with the present teaching, once the sheet has been cooled/set it can then be laminated at a PE lamination station 180 with a layer of PE film which is provided from a PE unwind station 185. It is then processed through an in-line thickness measurement station 186 and then passes through an edge trimming process where it is edge-trimmed. It then subsequently passes through a haul off 187 prior to be wound into rolls 190 and stored until such time as it is required to be converted into finished trays.

In another aspect of the present teaching where a non-laminated sheet is required, the PE lamination process is not included.

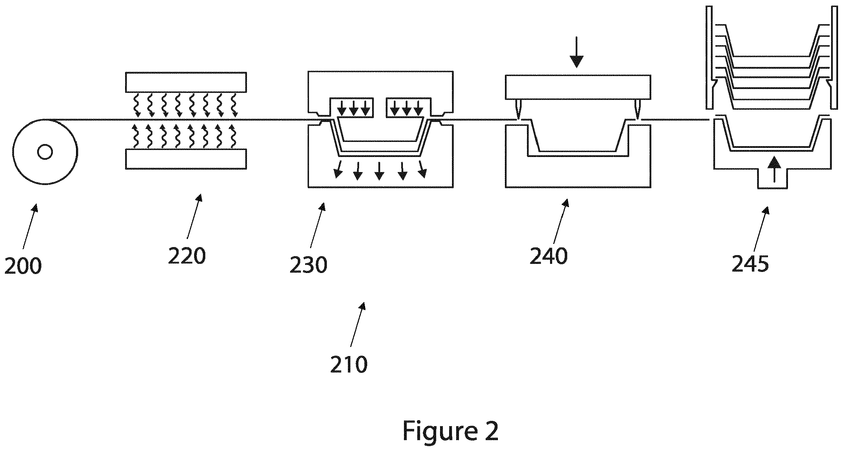

In this example, the sheet fabrication is done on a first production line and then rolled sheets are taken from the winding station 190 to a separate thermoforming production station - discussed with reference to Figure 2. In another embodiment, it is possible to feed the cooled sheet directly into a thermoformer to produce trays, thereby eliminating the need to produce rolls for storage.

Having formed a sheet, the coloured sheet, can then be thermoformed using a thermoforming processing such as that described with reference to Figure 2. When required the sheet is loaded onto an automatic unwinder 200 which feeds it into the thermoforming machine, the thermoformer 210, at a rate consistent with the throughput of the process.

The sheet is conveyed through the thermoformer by means of chains running within a set of mainly parallel rails. The chains have spikes that pierce the sheet to maintain a firm grip of it as it's conveyed through the machine. It will be appreciated that other arrangements will grip the sheet using grippers as opposed to piercing the sheet.

On entering the thermoformer 210 the sheet first passes through a series of heaters 220 that brings the material from ambient up to the optimal processing temperature. Depending on the individual product type being formed this processing temperature is typically maintained at 115°C to 160°C or preferably 125°C to 150°C or most preferably between 135°C to 145°C. This sheet temperature is measured by means of an automatic pyrometer readout taken just before it enters the mould.

As above, once the sheet has reached its optimal forming temperature it is indexed into an open thermoforming mould 230. Once stationary, the mould closes and vacuum is applied to the lower half of the mould to remove the air from the mould cavities. Almost instantaneously, the upper half of the mould is pressurised with forming air ranging in pressure from 3 bar (3 X 10 ⁵ Pa) to 8 bar (8 X 10 ⁵ Pa). Desirably a process pressure of 6 bar (6 X 10 ⁵ Pa)_to 8 bar (8 X 10 ⁵ Pa) is optimum. In cases where the formed tray is intended to be deeper than 45mm or complex in shape, such as a burger tray or multicompartment tray, a plug assist may commonly be used to aid the plastic movement of the material into the complex shapes of the mould cavity.

As the thermoforming mould is typically chilled to a temperature ranging from 5° to 40°C the formed part will quickly cool and set into the predefined shape of the mould cavity. In the case of the present teaching, the preferred mould temperature is in the region of 10°C to 20°C and most preferably between 12°C and 15°C.

Following a short stationary period where the material cools and hardens, the mould opens and the sheet indexes forward, moving more, hot, ready to form sheet into the mould and the now formed sheet out of the mould. This process continues until the formed sheet reaches the cutting station 240.

In the case of the present teaching, the cutting station is situated within the thermoforming machine. A series of hot steel knifes locate around the rim of the tray and with mechanical force cut through the plastic against a hardened anvil. At a number of points, typically 4, around the rim there is a gap in the steel knife so that an un-cut tab remains. These tabs ensure the tray is still connected to the skeletal waste, the area of unformed sheet between each formed tray, as it indexes through the thermoformer to the stacking station 245.

In another arrangement, the formed sheet is transported to a separate cutting station outside of the main thermoformer 200. This type of station may be referred to a cutting press or trim press, and normally stacking is completed at the same time as cutting.

In the stacking station 245, the trays are pushed from the skeletal into a basket known as a catcher. The pusher breaks the small tabs is it pushes the trays from the skeletal material in the catching basket. A/B, A/B/C, A/B/C/D and conventional staking arrangements can be used, depending on the size of the finished tray and the number and orientation of the trays in the mould. The waste is separated from the trays and typically chopped into flakes and reused in the extrusion process.

Finished stacks of trays are then bagged or auto-sleeved before being palletised and stored ready for shipping to the end customer. These finished trays will adopt a standardised shape of having a base with side walls extending upwardly from the base and terminating in a sealing flange against which a sealing film may be operatively placed. This sealing film may be secured to the flanged by a heat-sealing process, which will typically require the use of a PE laminate on the uppermost tray surface and against which a PE film may be operatively heat sealed. In another configuration, the sealing may be provided by providing a bead or layer of adhesive on the sealing flange and then using that adhesive to adhere to a sealing film that is placed in contact with that adhesive coated flange. In yet a further arrangement, the tray may be used in a vacuum skin pack configuration whereby a sealing film is not only sealed to the sealing flange but also to the side walls and any area of the base that is not occupied by the food stuff. In these arrangements a meat, or other food product, is initially provided within a receiving volume defined by the base and side walls of the tray. Once located, the sealing volume may be sealed - in an airtight fashion to extend shelf-life of the product- using for example the sealing film arrangements described above.

It will be appreciated that the present teaching provides a black plastic food tray that includes a novel masterbatch that is based on organic pigments which do not hamper or otherwise mask the NIR reflective properties of the base polymer that is used to fabricate the tray in the way that carbon black does. In this way, the formed tray is NIR detectable.

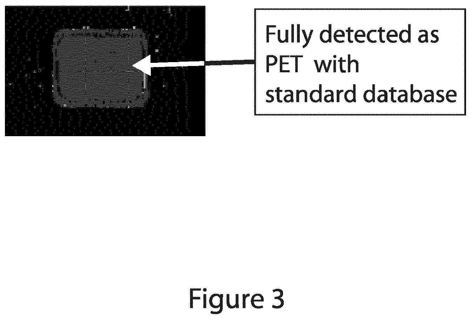

Figure 3 is an example of an optical recognition test on a PET tray that is fabricated in accordance with the present teaching. In the example shown the test regime was able to detect the tray as being fabricated from PET. Operatively, such a NIR optical recognition system would be located within a recycling sorting centre and would be able to detect and distinguish different types of household packaging from other types. Differently to black plastic trays that are coloured using carbon black, a tray per the present teaching is both non-metallic and hence can be used within a meat packaging plant that employs metal detectors (or inline metal detection systems) to ensure that there is no trace metal within the packaged meat and at the same time is recognisable to the NIR cameras that are deployed and hence can be recycled. Figures 4 and 5 shows, respectively, the NIR Absorbance Spectra of PET and NIR Reflectance Spectra of PET. It will be appreciated that PET has a signature response characteristic for both absorption and reflection that is identifiable using NIR sorting equipment used in recycling plants. Per the present teaching the incorporation of the masterbatch pigments does not affect the capacity to use these specific optical characteristics to identify PET trays during a recycling operation. In contrast to conventional masterbatches that are coloured using carbon black, the pigments selected per the present teaching do not mask the optical signature characteristics of the base polymer that is used in the tray formation.

Whilst preferred arrangements in accordance with the present teaching have been described, it will be understood that modifications can be made to that herein described without departing form the scope of the present teaching.

The words comprises/comprising when used in this specification are to specify the presence of stated features, integers, steps or components but does not preclude the presence or addition of one or more other features, integers, steps, components or groups thereof.

## Claims

1. A recyclable near infrared, NIR, detectable black plastic non-magnetic and non-metallic food tray for the packaging of foodstuffs, the tray comprising at least one thermoformed sheet fabricated from at least one polymer having defined NIR characteristics, the polymer being extruded with a black colourant comprising at least one non-magnetic organic pigment that does not mask the at least one polymers' NIR characteristics.

2. The tray of claim 1 wherein the black colourant is a mixture of component elements selected from one or more of:
a. A carrier material;
b. Organic pigments;
c. Wax
d. Filler material

3. The tray of any preceding claim wherein the at least one polymer is selected from one or more of the following;
a. Amorphous Polyethylene, APET;
b. Crystalline Polyethylene, CPET;
c. Polypropylene, PP;
d. Polyethylene, PE;
e. Polystyrene, PS;
f. Polyvinyl Chloride, PVC;
g. Ethylene Vinyl Alcohol, EVOH.

4. The tray of any preceding claim wherein the black colourant comprises at least two organic pigments, desirably wherein a first of the at least two pigments creates a substantially green compound and a second of the at least two pigments supplements and operatively darkens the substantially green compound.

5. The tray of claim 4 wherein the first of the at least two pigments constitutes between 1 and 40 weight percent of the colourant, and a second of the at least two pigments constitutes between 1 and 30 weight percent of the colourant.

6. The tray of any preceding claim wherein the colourant comprises first, second and third organic pigments, the first, second and third organic pigments comprising at least one of:
a. Phthalocyanine green used at 20 - 40 %,
b. Diketopyrrolo-Pyrrolo red used at 10 - 30 % and
c. Azo salt yellow used at 1 - 10 %.

7. The tray of any one of claims 1 to 6 wherein the colourant comprises first, second and third organic pigments, the first, second and third organic pigments comprising at least one of:
a. Monoazo pigments
b. Disazo pigments
c. Pigment lakes
d. Phthalocyanine pigments
e. Quinacridone pigments
f. Perylene pigments
g. Thioindigo pigments
h. Dioxazine pigments
i. Triarylcarbonium pigments
j. Diketopyrrolo-Pyrrolo pigments.

8. The tray of claim 2, wherein the carrier material comprises a wax, desirably a Low Density Polyethylene Wax selected from one of, Ethylene vinyl acetate, montan, paraffin or stearate-based wax.

9. The tray of claim 2, or any claim dependent on claim 2, wherein the filler material forms between 1 and 40 weight percent of the colourant and is selected from one of: hydrated magnesium silicate, barium sulphate, wollastonite, mica or silica-based fillers.

10. The tray of claims 2, or any claim dependent on claim 2, wherein the carrier material is selected from one or more of: PE, PP, PET, PETG, EVA, EMA, ABS, PS, PMMA.

11. The tray of claim 2, or any claim dependent on claim 2, wherein the colourant comprises the following in percentage relative weights: 20 % of Phthalocyanine green, 30 % of Diketopyrrolo-Pyrrolo red, 5 % of Azo salt yellow, 3 % of filler, 2 % of desiccant, 3 % of wax and 37 % of carrier.

12. The tray of any preceding claim wherein the colourant is extruded with the at least one polymer in the ratio of between 0.1 and 5 weight percent.

13. The tray of any preceding claim wherein the at least one thermoformed sheet is laminated with a polyethylene laminate.

14. The tray of any one of claims 1 to 12 wherein the at least one thermoformed sheet is co-extruded in a sandwich arrangement to form an A-B-A configuration.

15. A method of forming a recyclable near infrared, NIR, detectable black plastic non-magnetic and non-metallic food tray for the packaging of foodstuffs, the method comprising:
extruding a tray comprising at least one thermoformed sheet fabricated from at least one polymer having defined NIR characteristics, the polymer being extruded with a colourant comprising at least one non-magnetic organic pigment that does not mask the at least one polymers' NIR characteristics.
